Europäisches Patentamt

European Patent Office

Office européen des brevets

(19)

(11) Veröffentlichungsnummer : **0 063 110**
**B1**

# EUROPÄISCHE PATENTSCHRIFT

(12)

(45) Veröffentlichungstag der Patentschrift :
25.07.84

(21) Anmeldenummer : 82890022.5

(22) Anmeldetag : 16.02.82

(51) Int. Cl.³ : **C 04 B   7/36**, F 27 B   7/20,
F 27 D 13/00, C 04 B   7/44

(54) Verfahren zum Herstellen von Zement.

(30) Priorität : 15.04.81 AT 1707/81

(43) Veröffentlichungstag der Anmeldung :
20.10.82 Patentblatt 82/42

(45) Bekanntmachung des Hinweises auf die Patenterteilung : 25.07.84 Patentblatt 84/30

(84) Benannte Vertragsstaaten :
CH DE FR GB IT LI LU SE

(56) Entgegenhaltungen :
DE-A- 2 931 590
FR-A- 2 227 506
JP-B-39 022 855

(73) Patentinhaber : **VOEST-ALPINE Aktiengesellschaft**
**Werksgelände**
**A-4010 Linz (AT)**

(72) Erfinder : **Krennbauer, Franz**
**Mareusgang 5**
**A-4020 Linz (AT)**

(74) Vertreter : **Hübscher, Gerhard, Dipl.-Ing. et al**
**Patentanwälte Dipl.-Ing. Gerhard Hübscher Dipl.-Ing.**
**Helmut Hübscher Dipl.-Ing. Heiner Hübscher Spit-**
**telwiese 7**
**A-4020 Linz (AT)**

## Beschreibung

Die Erfindung bezieht sich auf ein Verfahren zum Herstellen von Zement, bei dem das Rohmehl vor dem Entsäuern in einem Kalzinator und dem anschließenden Brennen in einem Ofen in einem mehrstufigen Wärmeaustausch mit dem Abgasstrom aus dem Ofen einerseits und mit dem Abgasstrom aus dem Kalzinator anderseits vorgewärmt wird, wobei der Rohmehlstrom abwechselnd von einer Wärmetauscherstufe des einen zu einer Wärmetauscherstufe des anderen der in parallelen Strängen zusammengefaßten Abgasströme aus dem Ofen einerseits und aus dem Kalzinator anderseits geführt wird, sowie auf eine Vorrichtung zur Durchführung des Verfahrens.

Um einerseits die Entsäuerung im Kalzinator durch eine Verminderung des Kohlendioxid-Partialdruckes und anderseits die Vorwärmung des Rohmehles vor dem Eintritt in den Kalzinator zu verbessern, ist es bekannt (DE-A-29 31 590), den Kalzinator beispielsweise mit der erwärmten Kühlluft des nach dem Brennen zu Zementklinker abgekühlten Rohmehls zu versorgen und das Abgas aus dem Ofen dem Wärmetauscher zum Vorwärmen des Rohmehles zuzuführen, wobei die Abgasströme aus dem Ofen und aus dem Kalzinator in zwei voneinander getrennten parallelen Strängen des Wärmetauschers zusammengefaßt sind, während der Rohmehlstrom abwechselnd von einer Wärmetauscherstufe des einen zu einer Wärmetauscherstufe des anderen Stranges bis zum Kalzinator geführt wird. Da zufolge dieser Maßnahmen das Ofenabgas nicht in den Kalzinator gelangt, kann der Kohlendioxidgehalt während des Kalziniervorganges vergleichsweise klein gehalten werden. Außerdem läßt die Aufteilung des Abgasstromes in zwei von getrennten Quellen gespeisten Abgassträngen eine sehr vorteilhafte Ausnützung der fühlbaren Abwärme der Abgase zu, wobei durch das heiße Ofenabgas, dessen Eintrittstemperatur in den Wärmetauscher höher als die Eintrittstemperatur des Abgases aus dem Kalzinator liegt, eine höhere Vorwärmtemperatur des Rohmehles als bei einer einflutigen Abgasführung erreicht werden kann. Nachteilig bei diesen bekannten Anlagen ist allerdings, daß das Rohmehl in zwei dosierten Teilströmen aufgegeben werden muß, um annähernd gleiche Temperaturverhältnisse der beiden Abgasströme am kalten Ende des Wärmetauschers sicherzustellen. Es muß somit jedem Abgasstrang ein Teilstrom des Rohmehls zugeführt werden, bevor die beiden Teilströme vereinigt und gemeinsam zwischen den beiden Wärmetauscherstufen der beiden Abgasstränge hin- und hergeleitet werden können. Dies bedingt nicht nur einen vergrößerten Aufwand, sondern läßt auch nur eine verschlechterte Wärmeausnützung zu, weil bei sonst gleichen Bedingungen die Austrittstemperaturen der Abgasströme vom Massenverhältnis zwischen dem Rohmehl und dem Abgas abhängt. Dazu kommt noch, daß für jeden Abgasstrom ein gesondertes Gebläse erforderlich ist, wenn nicht bei den zu erwartenden unterschiedlichen Temperaturen und Drücken der Abgasströme eine entsprechende Überdimensionierung eines gemeinsamen Gebläses in Kauf genommen werden will.

Der Erfindung liegt somit die Aufgabe zugrunde, diese Mängel zu vermeiden und ein Verfahren zum Herstellen von Zement der eingangs geschilderten Art so zu verbessern, daß mit einem wesentlich geringeren Geräteaufwand das Auslangen gefunden und der thermische Wirkungsgrad verbessert werden kann.

Die Erfindung löst die gestellte Aufgabe dadurch, daß die parallel geführten Abgasströme aus dem Ofen und aus dem Kalzinator vor einer weiteren, in Strömungsrichtung der Abgase letzten Wärmetauscherstufe vereinigt werden und das dieser Wärmetauscherstufe aufgegebene, kalte Rohmehl gemeinsam erwärmen, bevor es abwechselnd den Wärmetauscherstufen der beiden Stränge zugeführt wird.

Durch das Zusammenführen der beiden Abgasströme vor der in Strömungsrichtung der Abgase letzten Wärmetauscherstufe wird eine gemeinsame Austrittstemperatur und auch ein gemeinsamer Druck für die Abgasströme nach der letzten Wärmetauscherstufe sichergestellt, so daß ein einziges Gebläse ohne Zwang zu einer Überdimensionierung eingesetzt werden kann. Darüber hinaus erübrigen sich getrennte Dosiereinrichtungen für die Rohmehlaufgabe, weil das Rohmehl in einem einzigen Strom dem Wärmetauscher aufgegeben werden kann. Damit wird aber auch eine vorteilhafte Ausnützung der fühlbaren Abwärme der Abgasströme in der bezüglich der Abgasströmungsrichtung letzten Wärmetauscherstufe erzielt.

Um im Bereich dieser letzten für beide Abgasströme gemeinsamen Wärmetauscherstufe die jeweils günstigsten Verhältnisse zu schaffen, sollte dafür Sorge getragen werden, daß die Abgasströme bei zumindest angenähert gleichem Gasdruck vereinigt werden. Dies kann im allgemeinen dadurch sichergestellt werden, daß der Strömungswiderstand im Strang für das Ofenabgas durch eine geeignete Auslegung der einzelnen Wärmetauschereinheiten dieses Abgasstranges entsprechend erhöht wird, was den Vorteil einer besseren Rohmehlabscheidung mit sich bringt, wenn, wie allgemein üblich, Zyklon-Wärmetauschereinheiten Verwendung finden.

Bei der Konstruktion einer Anlage zur Durchführung des Verfahrens kann vorteilhaft von einer Vorrichtung mit einem Ofen zum Brennen des entsäuerten Rohmehls und einem dem Ofen vorgeordneten Kalzinator ausgegangen werden, der an einem mehrstufigen Wärmetauscher angeschlossen ist, dessen Wärmetauschereinheiten in zwei parallelen, einerseits an eine Abgasleitung des Ofens und anderseits an eine Abgasleitung des Kalzinators angeschlossenen Abgassträngen hintereinandergeschaltet sind, wobei die Austragungsleitungen für das Rohmehl der Wärmetauschereinheiten des einen Stranges mit den Aufgabeleitungen des anderen Stranges abwechselnd verbunden sind. Werden bei einer solchen Vorrichtung die Gasaustrittsleitungen der in Strömungsrichtung der Abgase jeweils letzten Wärmetauschereinheiten der beiden Einzelstränge an der Gaseintrittsleitung einer weiteren, den beiden Strängen gemeinsamen Wärmetauschereinheit angeschlossen, so wird in dieser letzten Wärmetauschereinheit das dieser Wärmetauschereinheit zugeführte Rohmehl durch die beiden Abgasströme gemeinsam erwärmt, so daß eine Rohmehlaufgabe in getrennten Teilströmen überflüssig wird. Der damit verbundene Geräteaufwand kann folglich vermieden werden. Außerdem findet in dieser letzten Wärmetauschereinheit ein allenfalls vorhandener Unterschied hinsichtlich der Abgastemperaturen und der Abgasdrücke seinen Ausgleich, wodurch für das dieser Abgasdrücke seinen Ausgleich, wodurch für das dieser Wärmetauschereinheit bezüglich der Strömungsrichtung der Abgase nachgeordnete Gebläse einheitliche Bedingungen vorgegeben sind.

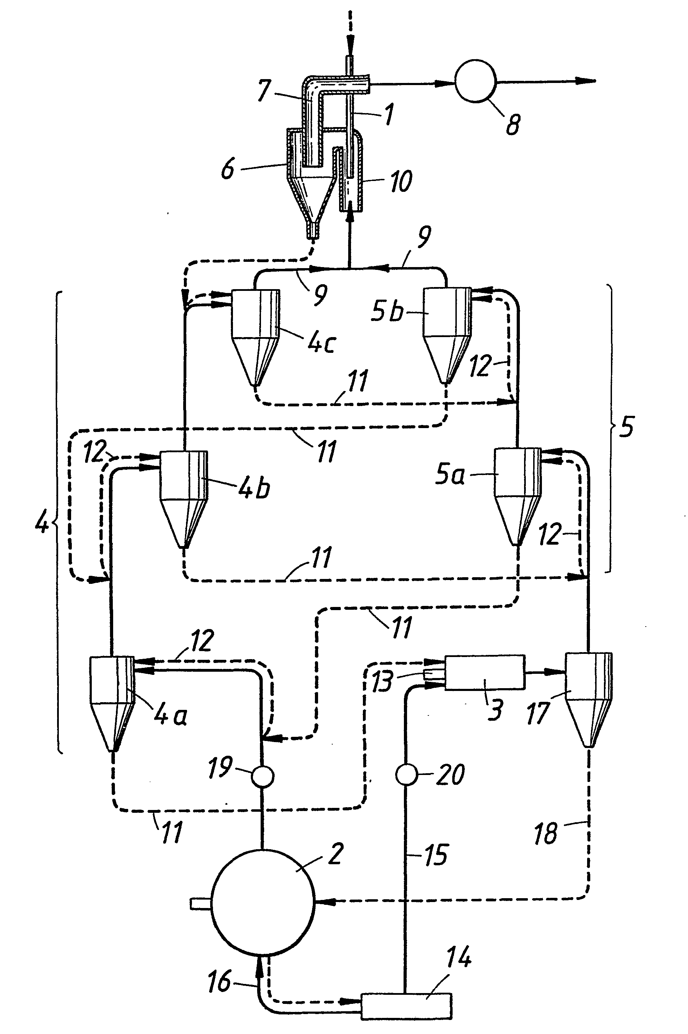

In der Zeichnung ist eine Vorrichtung zur Durchführung eines erfindungsgemäßen Verfahrens zum Herstellen von Zement in einem Blockschaltbild beispielhaft und vereinfacht dargestellt.

Das Rohmehl, dessen Fließschema in strichlierten Linien angedeutet ist, wird über eine Aufgabeleitung 1 einem mehrstufigen Wärmetauscher zugeführt, der einerseits von den Abgasen aus einem Drehrohrofen 2 zum Brennen des vorgewärmten und kalzinierten Rohmehls und anderseits von den Abgasen eines dem Drehrohrofen 2 vorgeordneten Kalzinators 3 gespeist wird. Dabei sind die beiden Abgasströme aus dem Drehrohrofen 2 und aus dem Kalzinator 3 in zwei parallelen Strängen 4 und 5 zusammengefaßt, die von den als Zyklonen ausgebildeten Wärmetauschereinheiten 4a, 4b und 4c einerseits sowie von den Wärmetauschereinheiten 5a und 5b anderseits gebildet werden. Wie aus dem in vollen Linien gezeichneten Fließschema für die Abgasströme entnommen werden kann, ist den beiden parallelen Strängen 4 und 5 hinsichtlich der Strömungsrichtung der Abgase eine gemeinsame Wärmetauschereinheit 6 nachgeschaltet, deren Gasaustrittsleitung 7 an ein Gebläse 8 angeschlossen ist, über das die abgekühlten Abgase abgeblasen werden. Da die Gasaustrittsleitungen 9 der in Strömungsrichtung der Abgase jeweils letzten Wärmetauschereinheiten 4c und 5b des Wärmetauschers in der Gaseintrittsleitung 10 der nachgeordneten Wärmetauschereinheit 6 münden, wird der dieser Wärmetauschereinheit 6 über die Aufgabeleitung 1 zugeführte Rohmehlstrom von den vereinigten Abgasströmen erwärmt. Nach dieser Vorwärmung des Rohmehlstromes in der Wärmetauschereinheit 6 wird der Rohmehlstrom abwechselnd von einer Wärmetauschereinheit des Stranges 4 zu einer Wärmetauschereinheit des Stranges 5 hin- und hergeführt, weil die Austragsleitungen 11 der Wärmetauschereinheiten des einen Stranges 4 bzw. 5 abwechselnd mit den Aufgabeleitungen 12 des anderen Stranges 5 bzw. 4 verbunden sind. Der Rohmehlstrom wird folglich abwechselnd über den Abgasstrom aus dem Drehrohrofen 2 und aus dem Kalzinator 3 erwärmt, wobei die hinsichtlich der Strömungsrichtung des Rohmehles letzte Wärmetauschereinheit 4a des Wärmetauschers mit dem heißen Ofenabgas erwärmt wird. Das in dieser Weise vorgewärmte Rohmehl weist daher eine vergleichsweise hohe Eintrittstemperatur für den Kalzinator 3 auf, in dem dem Rohmehl zur Entsäuerung zusätzliche Wärmemengen über einen Brenner 13 zugeführt werden. Als Verbrennungsluft kann dabei in vorteilhafter Weise ein Teil der erwärmten Kühlluft aus einem Kühler 14 herangezogen werden, dem das zu Zementklinker gebrannte Rohmehl aus dem Drehrohrofen 2 zur Abkühlung zugeleitet wird. Die Versorgungsleitung des Kalzinators 3 für die erwärmte Kühlluft ist mit 15 bezeichnet. Ein anderer Teil der erwärmten Kühlluft aus dem Kühler 14 kann über die Leitung 16 dem Drehrohrofen 2 als Verbrennungsluft zugeführt werden.

Das im Kalzinator 3 entsäuerte Rohmehl wird mit dem Abgasstrom aus dem Kalzinator einem Zyklonabscheider 17 zugefördert, dessen Austragungsleitung 18 für das Rohmehl im Drehrohrofen 2 mündet. Das heiße Kalzinator-Abgas wird zur Vorwärmung des Rohmehles der Wärmetauschereinheit 5a zugeführt.

Um möglichst gleiche Druckverhältnisse in den Gasaustrittsleitungen 9 der Wärmetauschereinheiten 4c und 5b sicherzustellen, können die unterschiedlichen Druckverluste in den beiden Strängen 4 und 5 durch unterschiedliche Druckverlustauslegung der Wärmetauschereinheiten ausgeglichen werden. Eine zusätzliche Drossel 19 in der Abgasleitung des Drehrohrofens 2 sorgt dür eine genaue Abgleichung. Die erforderliche Verbrennungsluft für den Kalzinator 3 kann in Abhängigkeit von der jeweiligen Brennstoffmenge über eine Regelklappe 20 in der Versorgungsleitung 15 gesteuert werden.

**Ansprüche**

1. Verfahren zum Herstellen von Zement, bei dem das Rohmehl vor dem Entsäuern in einem Kalzinator und dem anschließenden Brennen in einem Ofen in einem mehrstufigen Wärmeaustausch mit dem Abgasstrom aus dem Ofen einerseits und mit den Abgasstrom aus dem Kalzinator anderseits vorgewärmt wird, wobei der Rohmehlstrom abwechselnd von einer Wärmetauscherstufe des einen zu einer Wärmetauscherstufe des anderen der in parallelen Strängen zusammengefaßten Abgasströme aus dem Ofen einerseits und aus dem Kalzinator anderseits geführt wird, dadurch gekennzeichnet, daß die parallel geführten Abgasströme aus dem Ofen und aus dem Kalzinator vor einer weiteren, in Strömungsrichtung der Abgase letzten Wärmetauscherstufe vereinigt werden und das dieser Wärmetauscherstufe aufgegebene, kalte Rohmehl gemeinsam erwärmen, bevor es abwechselnd den Wärmetauscherstufen der beiden Stränge zugeführt wird.

2. Verfahren nach Anspruch 1, dadurch gekennzeichnet, daß die Abgasströme bei zumindest angenähert gleichem Gasdruck vereinigt werden.

3. Vorrichtung zur Durchführung des Verfahrens nach einem der Ansprüche 1 oder 2 mit einem Ofen (2) zum Brennen des entsäuerten Rohmehls und einem dem Ofen vorgeordneten Kalzinator (3), der an einem mehrstufigen Wärmetauscher angeschlossen ist, dessen Wärmetauschereinheiten in zwei parallelen, einerseits an eine Abgasleitung des Ofens und anderseits an eine Abgasleitung des Kalzinators angeschlossenen Abgassträngen (4, 5) hintereinandergeschaltet sind, wobei die Austragungsleitungen für das Rohmehl der Wärmetauschereinheiten des einen Stranges mit den Aufgabeleitungen des anderen Stranges abwechselnd verbunden sind, dadurch gekennzeichnet, daß die Gasaustrittsleitungen (9) der in Strömungsrichtung der Abgase jeweils letzten Wärmetauschereinheiten (4c, 5b) der beiden Einzelstränge (4, 5) an der Gaseintrittsleitung (10) einer weiteren, den beiden Strängen (4, 5) gemeinsamen Wärmetauschereinheit (6) angeschlossen sind.

## Claims

1. A process of making cement, in which the ground raw materials before being de-acidified in a calcinator and being subsequently burnt in a kiln are preheated by a multistage heat exchange with the exhaust gas stream from the kiln and with the exhaust gas stream from the calcinator, wherein the exhaust gas streams from the kiln and from the calcinator are conducted in parallel lines and the stream of ground raw materials is conducted in alternation from a heat exchanger stage of one of said lines to a heat exchanger state of the other of said lines, characterized in that the parallel exhaust gas streams from the kiln and from the calcinator are combined before an additional heat exchanger stage, which is the last heat exchanger stage in the direction of flow of the exhaust gases and used to jointly heat the cold raw materials mixture, which is charged to said heat exchanger stage and is subsequently fed in alternation to the heat exchanger stages of the two lines.

2. A process according to claim 1, characterized in that the exhaust gas streams are combined when they are at least approximately under the same gas pressure.

3. Apparatus for carrying out the process according to any of claims 1 or 2, comprising a kiln (2) for burning the de-acidified ground raw materials mixture, and a calcinator (3), which precedes the kiln and is connected to a multistage heat exchanger having heat exchanger units which are connected in series in two parallel exhaust gas lines (4, 5), which are respectively connected to an exhaust gas outlet of the kiln and exhaust gas outlet of the calcinator, wherein the ground raw materials outlets of the heat exchanger units of each line are connected in alternation to the inlets of the other line, characterized in that the gas outlets (9) of that heat exchanger unit (4c, 5b) is connected to the gas inlet (10) of an additional heat exchanger unit (6), which is associated with both lines (4, 5).

## Revendications

1. Procédé de fabrication de ciment, dans lequel, avant la désacidification dans un calcinateur et la cuisson qui suit dans un four, on préchauffe la farine crue, dans un échange de chaleur en plusieurs stades avec le courant de gaz d'échappement venant du four, d'une part, et avec le courant de gaz d'échappement venant du calcinateur, d'autre part, le courant de farine brute étant conduit alternativement d'un étage d'échange de chaleur de l'un à un étage d'échange de chaleur de l'autre des courants de gaz d'échappement venant du four, d'une part, et du calcinateur, d'autre part, réunis en parcours parallèles, caractérisé par le fait que les courants de gaz d'échappement, conduits parallèlement venant du four et du calcinateur, se réunissent avant un autre étage d'échangeur de chaleur et chauffent conjointement la farine crue froide amenée à cet étage d'échangeur de chaleur, avant qu'elle ne soit amenée alternativement aux étages d'échangeur de chaleur des deux parcours.

2. Procédé selon la revendication 1, caractérisé par le fait que les courants de gaz d'échappement se réunissent à une pression de gaz au moins approximativement égale.

3. Appareil pour la mise en œuvre du procédé selon l'une des revendications 1 et 2, comportant un four (2) pour la cuisson de la farine crue désacidifiée et un calcinateur (3) placé avant le four et raccordé à un échangeur de chaleur à plusieurs étages dont les unités d'échangeur de chaleur sont branchées à la suite l'une de l'autre dans deux parcours parallèles reliés, d'une part, à un tuyau à gaz d'échappement du four et, d'autre part, à un tuyau à gaz d'échappement du calcinateur, les tuyaux d'extraction destinés à la farine crue des unités d'échangeur de chaleur de l'un des parcours étant reliés alternativement aux tuyaux d'amenée de l'autre parcours, caractérisé par le fait que les tuyaux (9) de sortie de gaz des unités d'échangeur de chaleur (4c, 5b) des deux parcours (4, 5), qui sont chaque fois la dernière dans le sens d'écoulement des gaz d'échappement, sont raccordés au tuyau d'entrée de gaz (10) d'une autre unité d'échangeur de chaleur (6) commune aux deux parcours (4, 5).